# EUROPEAN PATENT APPLICATION

(11) **EP 4 773 319 A1**
(43) Date of publication of application: **08.07.2026**
(21) Application number: 24859160.4
(22) Date of filing: 04.07.2024
(51) Int. Cl.: H01M 10/0587, H01M 4/131, H01M 4/134, H01M 4/36, H01M 4/38, H01M 50/107, H01M 50/119, H01M 50/538

(54) **NON-AQUEOUS ELECTROLYTE SECONDARY BATTERY**

(30) Priority: 30.08.2023 JP 2023140112
(71) Applicant: Panasonic Intellectual Property Management Co., Ltd., Kadoma-shi, Osaka 571-0057 (JP)
(72) Inventor: TSUKASAKI, Takashi, kadoma-shi, Osaka 571-0057 (JP); MATSUMOTO, Katsumasa, kadoma-shi, Osaka 571-0057 (JP)
(74) Representative: Novagraaf International SA
(86) International application number: PCT/JP2024/024188
(87) International publication number: WO 2025/047115

(57) **Abstract**

The positive electrode active material contains a lithium-containing composite oxide; the negative electrode active material contains a silicon-containing material; the discharge capacity per 1.0 g of the negative electrode mixture layer (52) is 0.5 Ah or more; and the thickness of the negative electrode mixture layer (52) is 85 µm or less. The positive electrode (11) has one or more double-sided positive electrode current collector exposed parts (45a, 45b), and the negative electrode (12) has one or more double-sided negative electrode current collector exposed parts (55a). The one or more double-sided positive electrode current collector exposed parts (45a, 45b) include one or more lead fixing exposed parts (45a), and a negative electrode lead (21) is fixed to the double-sided negative electrode current collector exposed part (55a). The double-sided negative electrode current collector exposed part (55a) faces double-sided positive electrode current collector exposed parts (45a, 45b) through an interposed separator (13), and at least a part of a positive electrode lead (20) is fixed in a location that overlaps in the height direction with the negative electrode lead facing position in the positive electrode (11) that the negative electrode lead (21) faces via the interposed separator (13).

## Description

### TECHNICAL FIELD

The present disclosure relates to a non-aqueous electrolyte secondary battery.

### BACKGROUND ART

As non-aqueous electrolyte secondary batteries, there is conventionally a cylindrical battery disclosed in Patent Literature 1. The cylindrical battery comprises an electrode assembly having a positive electrode and a negative electrode wound through a separator, a bottomed cylindrical housing can that houses the electrode assembly, and a sealing assembly that is crimped and fixed to an opening portion of the housing can through a gasket. One end portion of a positive electrode lead is joined to an intermediate portion in a winding direction of the positive electrode, and the other end portion of the positive electrode lead is joined to the inner surface of the sealing assembly. In addition, one end portion of a negative electrode lead is joined to a winding finish-side end portion of the negative electrode, and the other end portion of the negative electrode lead is joined to the inner surface of the bottom of the housing can.

### CITATION LIST

### PATENT LITERATURE

PATENT LITERATURE 1: Japanese Unexamined Patent Application Republication No. 2019-044770

### SUMMARY

In the cylindrical battery in Patent Literature 1, the negative electrode lead is joined to the winding finish-side end portion. However, when the negative electrode lead is joined to an intermediate portion in the winding direction instead of the winding finish-side end portion, a current collecting path is shortened and electrical resistance is reduced, so that the battery is likely to have high output. However, the inventor of the present invention has found that by joining the negative electrode lead to an intermediate portion in the winding direction of the negative electrode, a level difference between a negative electrode current collector exposed portion where the negative electrode lead is joined and a negative electrode mixture layer arrangement portion is generated in the intermediate portion in the winding direction, so that the roundness of the electrode assembly is likely to deteriorate and thereby crushing of a separator is likely to occur. Here, when the crushing of the separator occurs, a battery reaction is likely to become uneven in the winding direction, and a capacity retention rate is likely to decrease. Therefore, it is an advantage of the present disclosure to provide a non-aqueous electrolyte secondary battery that can easily achieve high output and can also restrain crushing of a separator.

In order to solve the above problem, a non-aqueous electrolyte secondary battery according to the present disclosure comprises: an electrode assembly formed by winding a positive electrode and a negative electrode through a separator, the positive electrode having a positive electrode current collector and a positive electrode mixture layer arranged on the positive electrode current collector, the negative electrode having a negative electrode current collector and a negative electrode mixture layer arranged on the negative electrode current collector; a non-aqueous electrolyte, a bottomed cylindrical housing can that houses the electrode assembly and the non-aqueous electrolyte; one or more positive electrode leads that are fixed to the positive electrode current collector and that include a protruding portion protruding from a first side in a height direction of the electrode assembly; and one or more negative electrode leads that are fixed to the negative electrode current collector and that include a protruding portion protruding from a second side in the height direction of the electrode assembly, wherein the positive electrode mixture layer contains a lithium-containing composite oxide as a positive electrode active material, the negative electrode mixture layer contains a silicon-containing material as a negative electrode active material, a discharge capacity per 1.0 g of the negative electrode mixture layer is greater than or equal to 0.5 Ah, the negative electrode mixture layer has a thickness of less than or equal to 85 µm, the positive electrode has one or more double-sided positive electrode current collector exposed portions where the positive electrode current collector is exposed in substantially identical regions in a positive electrode longitudinal direction on both a positive electrode first surface and a positive electrode second surface, the one or more double-sided positive electrode current collector exposed portions include one or more lead fixed and exposed portions that are fixed to the positive electrode lead, the negative electrode has one or more double-sided negative electrode current collector exposed portions where the negative electrode current collector is exposed in substantially identical regions in a negative electrode longitudinal direction on both a negative electrode first surface and a negative electrode second surface, the one or more double-sided negative electrode current collector exposed portions faces the one or more double-sided positive electrode current collector exposed portion through the separator, the one or more double-sided negative electrode current collector exposed portions are fixed to the negative electrode lead, and at least a portion of the positive electrode lead is fixed to a location that overlaps, in the height direction, a negative electrode lead facing position in the positive electrode that faces the negative electrode lead via the separator.

According to the non-aqueous electrolyte secondary battery according to the present disclosure, it is possible to easily achieve high output and to also restrain crushing of the separator.

### BRIEF DESCRIPTION OF THE DRAWING

FIG. 1 is an axial sectional view of a cylindrical non-aqueous electrolyte secondary battery according to an embodiment of the present disclosure.
FIG. 2 is a perspective view of an electrode assembly.
FIG. 3 is a schematic view schematically showing an example of the structure of a negative electrode mixture layer.
FIG. 4A is a plan view showing a winding outer surface, a positive electrode lead, and an insulating tape in a positive electrode developed into a long shape.
FIG. 4B is a plan view showing a winding inner surface, the positive electrode lead, and the insulating tape in the positive electrode developed into a long shape.
FIG. 4C is a plan view showing a winding outer surface, the negative electrode lead, and the insulating tape in a negative electrode developed into a long shape.
FIG. 4D is a plan view showing a winding inner surface, the negative electrode lead, and the insulating tape in the negative electrode developed into a long shape.
FIG. 5 is an enlarged schematic sectional view around the negative electrode lead in a cross section that is orthogonal to the height direction of an electrode assembly and passes through the negative electrode lead.
FIG. 6A is a plan view showing the winding outer surface, the positive electrode lead, and the insulating tape in the positive electrode developed into a long shape in a cylindrical lithium-ion secondary battery in a first modification.
FIG. 6B is a plan view showing the winding inner surface, the positive electrode lead, and the insulating tape in the positive electrode developed into a long shape in the cylindrical lithium-ion secondary battery in the first modification.
FIG. 6C is a plan view showing the winding outer surface, the negative electrode lead, a winding finish-side negative electrode lead, and the insulating tape in the negative electrode developed into a long shape in the cylindrical lithium-ion secondary battery in the first modification.
FIG. 6D is a plan view showing the winding inner surface, the negative electrode lead, the winding finish-side negative electrode lead, and the insulating tape in the negative electrode developed into a long shape in the cylindrical lithium-ion secondary battery in the first modification.
FIG. 7A is a plan view showing the winding outer surface, three positive electrode leads, and the insulating tape in the positive electrode developed into a long shape in a cylindrical non-aqueous electrolyte secondary battery in a second modification.
FIG. 7B is a plan view showing the winding inner surface, the three positive electrode leads, and the insulating tape in the positive electrode developed into a long shape in the cylindrical non-aqueous electrolyte secondary battery in the second modification.
FIG. 7C is a plan view showing the winding outer surface, three negative electrode leads, and the insulating tape in the negative electrode developed into a long shape in the cylindrical non-aqueous electrolyte secondary battery in the second modification.
FIG. 7D is a plan view showing the winding inner surface, the three negative electrode leads, and the insulating tape in the negative electrode developed into a long shape in the cylindrical non-aqueous electrolyte secondary battery in the second modification.

### DESCRIPTION OF EMBODIMENTS

Hereinafter, an embodiment of a cylindrical non-aqueous electrolyte secondary battery according to the present disclosure will be described in detail with reference to the drawings. It is assumed from the beginning that a new embodiment is constructed by appropriately combining characteristic portions of the embodiment or modifications thereof as will be described below. In the embodiment below, like component members are designated by like reference signs to omit redundant description. The plurality of drawings are schematic views, and throughout the different drawings, dimensional ratios of length, width, height, and the like do not necessarily match for each member. In this specification, the side of a sealing assembly 17 in an axial direction of a cylindrical non-aqueous electrolyte secondary battery 10 is defined as "upper side", and the side of a bottom portion 68 of a housing can 16 in the axial direction is defined as "lower side". In this specification, when merely a "height direction" is mentioned, the height direction refers to the height direction of an electrode assembly (winding-up assembly) 14.

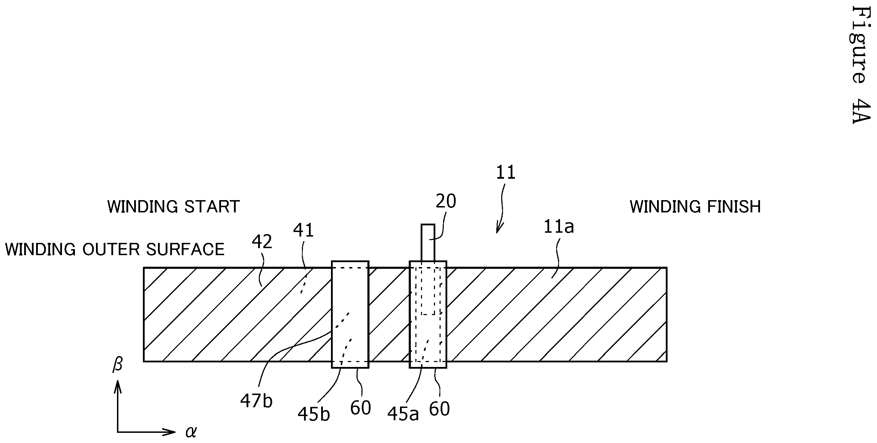

Developments of electrodes (negative electrode and positive electrode) in FIGS. 4A to 4D, 6A to 6D, and 7A to 7D are schematic views, and in these developments, longitudinal dimensions are drawn at a smaller scale. In the plurality of developments of the electrodes, regions indicated by hatched lines are mixture layer arrangement regions. In the following description, the technical ideas of the present disclosure are described by taking as an example the case where the cylindrical non-aqueous electrolyte secondary battery is a cylindrical lithium-ion secondary battery, though the cylindrical non-aqueous electrolyte secondary battery in the present disclosure is not limited to the cylindrical lithium-ion secondary battery. Among the component members described below, those not included in an independent claim that represents the highest-level concept are optional and not essential component members.

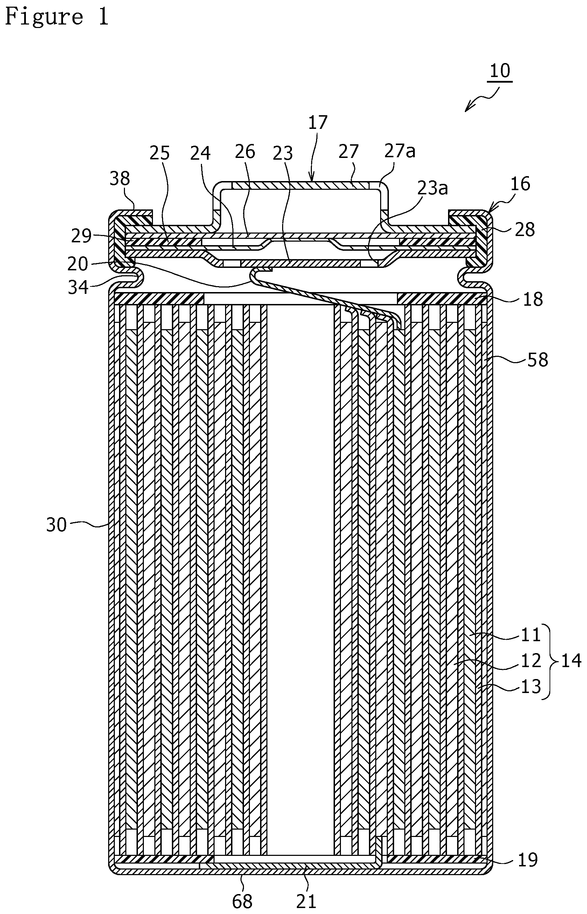

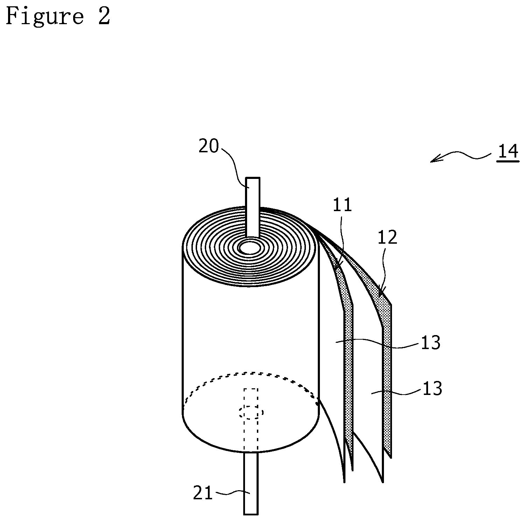

FIG. 1 is an axial sectional view of a cylindrical non-aqueous electrolyte secondary battery 10 according to an embodiment of the present disclosure, and FIG. 2 is a perspective view of an electrode assembly 14 of the cylindrical non-aqueous electrolyte secondary battery 10. As shown in FIG. 1, the cylindrical non-aqueous electrolyte secondary battery (hereinafter simply referred to as the battery) 10 comprises a winding type electrode assembly 14, a non-aqueous electrolyte (not shown), a bottomed cylindrical metallic housing can 16 that houses the electrode assembly 14 and the non-aqueous electrolyte, and a sealing assembly 17 that seals an opening portion of the housing can 16. As shown in FIG. 2, the electrode assembly 14 has a winding structure formed by winding a long-shaped positive electrode 11 and a long-shaped negative electrode 12 through two long-shaped separators 13.

In order to prevent lithium deposition, the negative electrode 12 is formed with a dimension that is slightly larger than the positive electrode 11. Specifically, the negative electrode 12 is formed to be longer in a longitudinal direction and a width direction (short direction) than the positive electrode 11. The two separators 13 are formed with a dimension that is at least slightly larger than the positive electrode 11 and are arranged, for example, to hold the positive electrode 11 therebetween. The negative electrode 12 may constitute a winding start end of the electrode assembly 14. However, the separators 13 typically extend beyond a winding start-side end of the negative electrode 12, and the winding start-side ends of the separators 13 constitute the winding start end of the electrode assembly 14.

The non-aqueous electrolyte has ion conductivity (for example, lithium ion conductivity). The non-aqueous electrolyte may be a liquid electrolyte (electrolyte solution) or a solid electrolyte. The liquid electrolyte (electrolyte solution) contains non-aqueous solvent and electrolyte salt solved in the non-aqueous solvent. As the non-aqueous solvent, there may be used, for example, esters, ethers, nitriles, amides, and mixed solvents of two or more of the group consisting of these. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen substituted product (e.g., fluoroethylene carbonate) that replaces at least some of the hydrogen in these solvents with halogen atoms such as fluorine. As the electrolyte salt, lithium salt such as LiPF₆ is used, for example.

As the solid electrolyte, there may be used, for example, solid or gel-like polymer electrolyte, inorganic solid electrolyte, or the like. The polymer electrolyte contains, for example, lithium salt and matrix polymer, or non-aqueous solvent, lithium salt, and matrix polymer. As the matrix polymer, a polymer material that turns into a gel by absorbing non-aqueous solvent is used, for example. As the polymer material, there may be used, for example, fluororesin, acrylic resin, and polyether resin, or the like. As the inorganic solid electrolyte, materials that are publicly known in all solid lithium-ion secondary batteries (e.g., oxide-based solid electrolyte, sulfide-based solid electrolyte, halogen-based solid electrolyte, etc.) may be used.

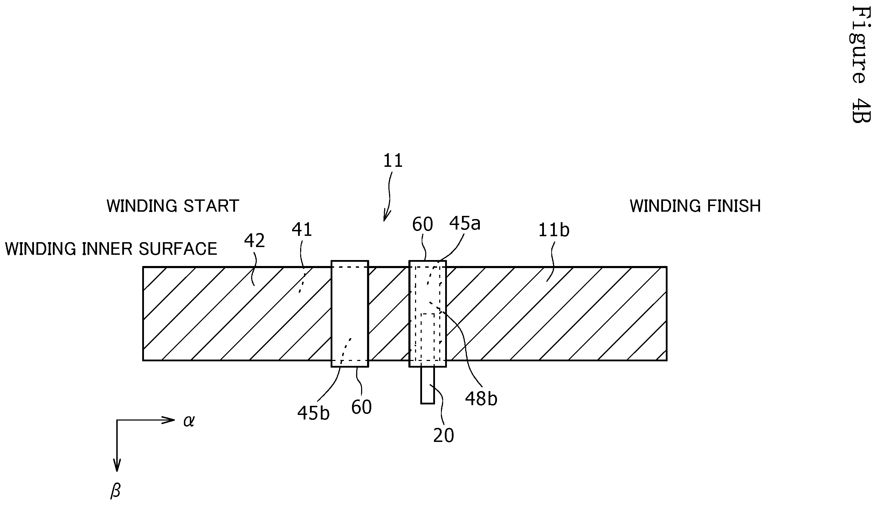

A positive electrode 11 includes a positive electrode current collector 41 (see FIGS. 4A and 4B) and a positive electrode mixture layer 42 arranged on both the surfaces of the positive electrode current collector 41 (see FIGS. 4A and 4B). As the positive electrode current collector 41, there may be used a foil made of metal, such as aluminum and aluminum alloy, that is stable in a potential range of the positive electrode 11, a film with the metal arranged on its surface layer, or the like. The positive electrode mixture layer 42 contains a positive electrode active material, a conductive agent, and a binding agent. The positive electrode 11 can be fabricated by, for example, coating the positive electrode current collector 41 with positive electrode mixture slurry containing a positive electrode active material, a conductive agent, and a binding agent, or the like, drying the coating, and then compressing the coating to form a positive electrode mixture layer 42 on both the surfaces of the positive electrode current collector 41.

The positive electrode active material is constituted with lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. Preferable examples of the lithium-containing metal composite oxide include a composite oxide containing at least one of the group consisting of Ni, Co, Mn, and Al. The lithium-containing composite oxide may have a spinel structure and may have an olivine structure. However, the lithium-containing composite oxide preferably has a layered rock-salt structure because it facilitates the fabrication of the positive electrode 11 with a large discharge capacity.

Examples of the conductive agent contained in the positive electrode mixture layer 42 may include carbon materials such as carbon black, acetylene black, Ketjenblack, graphite, and carbon nanotube. Examples of the binding agent contained in the positive electrode mixture layer 42 may include fluororesin such as polytetrafluoroethylene (PTFE), and polyvinylidene difluoride (PVdF), polyacrylonitrile (PAN), polyimide resin, acrylic resin, and polyolefin resin. These resins may be used in combination with cellulose derivatives such as carboxymethylcellulose (CMC) or its salts, polyethylene oxide (PEO), or the like.

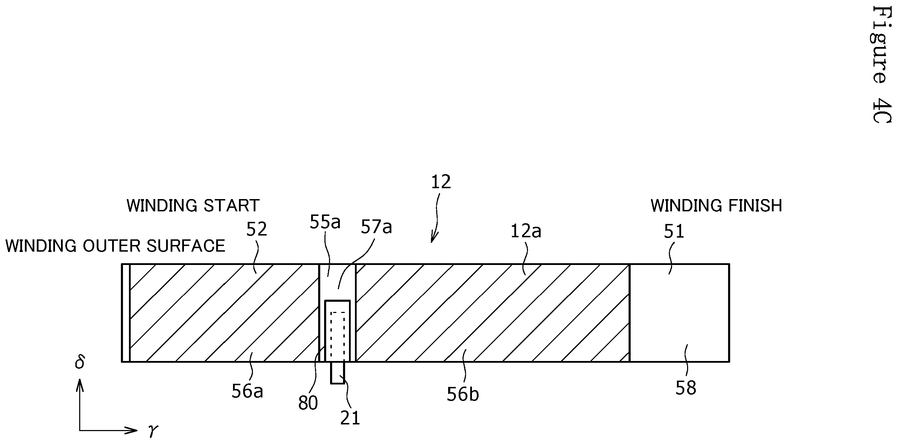

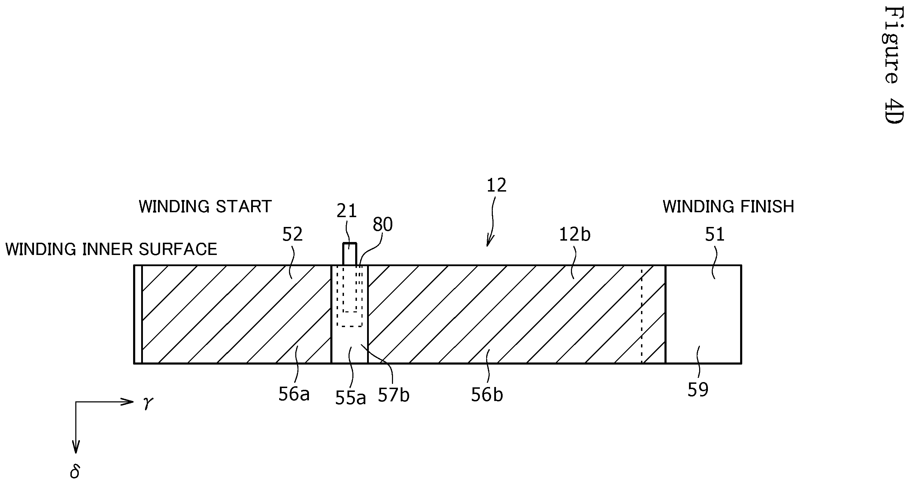

A negative electrode 12 includes a negative electrode current collector 51 (see FIGS. 4C and 4D) and a negative electrode mixture layer 52 (see FIGS. 4C and 4D) arranged on both the surfaces of the negative electrode current collector 51. As the negative electrode current collector 51, there may be used a foil made of metal, such as copper and copper alloy, that is stable in a potential range of the negative electrode 12, a film with the metal arranged on its surface layer, or the like. The negative electrode mixture layer 52 contains a negative electrode active material and a binding agent. The negative electrode 12 can be fabricated by, for example, coating the negative electrode current collector 51 with negative electrode mixture slurry containing a negative electrode active material, and a binding agent, or the like, drying the coating, and then compressing the coating to form the negative electrode mixture layer 52 on both the surfaces of the negative electrode current collector 51.

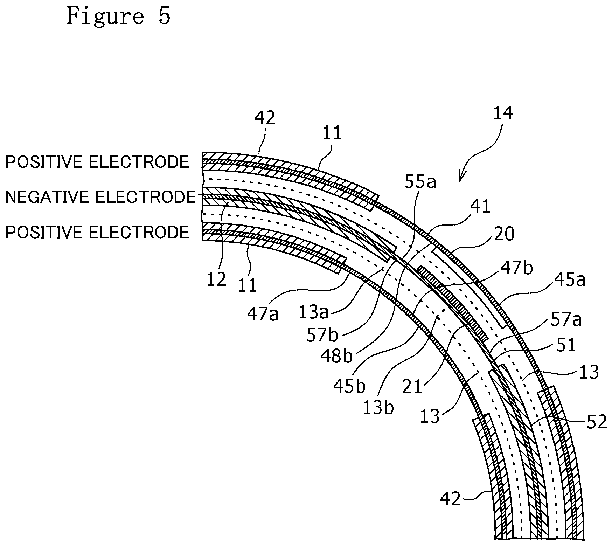

As the negative electrode active material, a carbon material that reversibly absorbs and releases lithium ions is typically used. Preferable carbon materials include natural graphite such as flake graphite, massive graphite, and earthy graphite, and artificial graphite such as massive artificial graphite, and graphitized mesophase carbon microbeads. The negative electrode mixture layer 52 has a thickness of less than or equal to 85 µm. As described later, in the present disclosure, the negative electrode lead 21 is fixed to a radial intermediate portion of the electrode assembly 14. Accordingly, a step portion between a winding outer-side negative electrode current collector exposed portion 57a where the negative electrode lead 21 is fixed (see FIGS. 4C and 5) and the negative electrode mixture layer 52 are formed in the radial intermediate portion. As will be discussed later, it is possible to effectively restrain crushing of the separator around the step portion, if the thickness of the negative electrode mixture layer is less than or equal to 85 µm. Therefore, the battery reaction is likely to become uniform in the winding direction, which makes it easy to fabricate the excellent battery 10 with a high capacity retention rate.

When the thickness of the negative electrode mixture layer 52 is greater than or equal to 40 µm, it is possible to prevent the negative electrode 12 from being excessively thinner than the positive electrode 11, and this can ensure smooth winding of the electrode assembly 14. A discharge capacity per 1.0 g of the negative electrode mixture layer 52 is greater than or equal to 0.5 Ah. In order to effectively increase the discharge capacity per 1.0 g of the negative electrode mixture layer 52, the negative electrode mixture layer 52 preferably includes a silicon-containing material that contains silicon (Si) as a negative electrode active material.

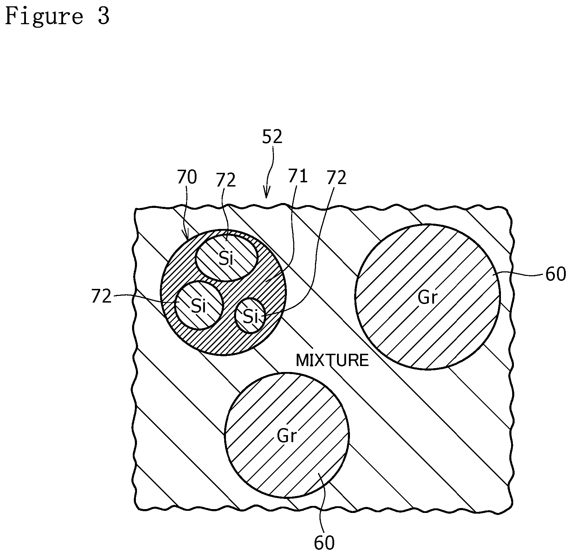

FIG. 3 is a schematic view schematically showing an example of the structure of the negative electrode mixture layer 52. As shown in FIG. 3, the negative electrode mixture layer 52 preferably contains a black lead (graphite) 60 and a silicon-containing material 70. The silicon-containing material 70 includes, for example, an ionically conductive phase 71 and an Si phase 72 dispersed in the ionically conductive phase 71. For easily achieving higher discharge capacity and high output of the battery 10, a weight ratio of the Si phase 72 in the silicon-containing material 70 is preferably greater than or equal to 30%. In addition, as a volume change in the negative electrode mixture layer 52 can be reduced during charging and discharging and the expansion and contraction of the electrode assembly 14 can be restrained during charging and discharging, the durability of the battery 10 is likely to be excellent, and therefore the weight ratio of the Si phase 72 in the silicon-containing material 70 is preferably less than or equal to 60%. The ionically conductive phase 71 may be constituted of, for example, an amorphous carbon phase, a lithium silicate phase, a silicon oxide phase, a titanium oxide phase, a zirconium oxide phase, or the like. However, the ionically conductive phase 71 preferably contains an amorphous carbon phase in order to restrain the volume change in the negative electrode active material during charging and discharging and to increase charging and discharging efficiency.

From the perspective of a weight ratio of the silicon element to the negative electrode mixture layer 52, the weight ratio of the silicon element to the negative electrode mixture layer 52 is preferably greater than or equal to 7 mass%, and more preferably greater than or equal to 12 mass% for high discharge capacity and high output of the battery 10. In addition, as the volume change in the negative electrode mixture layer 52 can be reduced during charging and discharging and the expansion and contraction of the electrode assembly 14 can be restrained during charging and discharging, the excellent durability of the battery 10 is achieved. Accordingly, the weight ratio of the silicon element to the negative electrode mixture layer 52 is preferably less than or equal to 50 mass%. In the case where the negative electrode mixture layer 52 contains the silicon-containing material 70, the mass of the silicon element may be equivalent to the mass of Si phase 72. In other words, the weight ratio of the Si phase 72 to the negative electrode mixture layer 52 may be greater than or equal to 7 mass% and less than or equal to 50 mass%. As the negative electrode active material, there may be used metals, other than Si, that alloy with lithium, or alloys containing the metals, and compounds containing the metals, or the like.

As the binding agent contained in the negative electrode mixture layer 52, there may be used, as in the case of the positive electrode 11, fluororesin, PAN, polyimide resin, acrylic resin, polyolefin resin, or the like, though styrene-butadiene rubber (SBR) or its modification products are preferably used. For example, the negative electrode mixture layer 52 may contain, in addition to SBR or the like, CMC or its salt, polyacrylic acid (PAA) or its salt, polyvinyl alcohol, or the like.

As the separators 13, a porous sheet with ion permeability and insulation properties is used. Specific examples of the porous sheet include microporous thin films, woven fabrics, and non-woven fabrics. Preferable materials of the separators 13 include polyolefin resin such as polyethylene and polypropylene, and cellulose. The separators 13 may have one of a single-layer structure and a multilayer structure. On the surface of the separators 13, a heat-resistant layer or the like may be formed.

As shown in FIG. 1, the positive electrode 11 is joined to a positive electrode lead 20, while the negative electrode 12 is joined to the negative electrode lead 21. The battery 10 has an insulating plate 18 above the electrode assembly 14 and an insulating plate 19 below the electrode assembly 14. The positive electrode lead 20 extends toward the sealing assembly 17 through a through-hole of the insulating plate 18, and the negative electrode lead 21 extends toward the bottom portion 68 of the housing can 16 through a through-hole of the insulating plate 19. The positive electrode lead 20 is connected to the lower surface of a sealing plate 23 of the sealing assembly 17 by welding or other processing. A terminal cap 27, which constitutes a top plate of the sealing assembly 17, is electrically connected to the sealing plate 23, so that the terminal cap 27 serves as a positive electrode terminal. The negative electrode lead 21 is connected to an inner surface of the bottom portion 68 of the metallic housing can 16 by welding or other processing, so that the housing can 16 serves as a negative electrode terminal. In the present embodiment, the positive electrode lead 20 is electrically connected to an intermediate portion such as a central portion of the positive electrode current collector 41 in a winding direction, while the negative electrode lead 21 is electrically connected to an intermediate portion such as a central portion of the negative electrode current collector 51 in the winding direction.

The battery 10 further comprises a resin gasket 28 arranged between the housing can 16 and the sealing assembly 17. The sealing assembly 17 is crimped and fixed to an opening portion of the housing can 16 through the gasket 28. As a result, internal space of the battery 10 is sealed. The gasket 28 is held between the housing can 16 and the sealing assembly 17 to insulate the sealing assembly 17 against the housing can 16. The gasket 28 functions as a sealing material to maintain the inside of the battery airtight and also functions as an insulating material to insulate between the housing can 16 and the sealing assembly 17.

The housing can 16 houses the electrode assembly 14 and non-aqueous electrolyte. The housing can 16 has a cylindrical portion 30 and the bottom portion 68, and the cylindrical portion 30 includes a shoulder portion 38 and a grooved portion 34. The grooved portion 34 can be formed by, for example, recessing a portion of the side surface of the housing can 16 radially inward in an annular shape by a spinning process performed in a radially inward direction. The shoulder portion 38 is formed by bending an upper end portion of the housing can 16 inward toward a circumferential edge portion 29 of the sealing assembly 17, when the sealing assembly 17 is crimped and fixed to the housing can 16.

The sealing assembly 17 has a structure formed by stacking the sealing plate 23, a lower vent member 24, an insulating member 25, an upper vent member 26, and the terminal cap 27 in order from the side of the electrode assembly 14. Each member constituting the sealing assembly 17 has, for example, a disc shape or a ring shape, and each member except the insulating member 25 is electrically connected to each other. The sealing plate 23 has at least one through-hole 23a. The lower vent member 24 and the upper vent member 26 are connected at their center portions, with the insulating member 25 being interposed between their respective circumferential edge portions.

When the battery 10 generates abnormal heat and the internal pressure of the battery 10 increases, the lower vent member 24 deforms so as to push the upper vent member 26 toward the terminal cap 27 and breaks, resulting in interruption of a current path between the lower vent member 24 and the upper vent member 26. As the internal pressure further increases, the upper vent member 26 breaks, so that gas is discharged through a through-hole 27a of the terminal cap 27. As the gas is discharged, excessive increase in internal pressure of the battery 10 and resultant busting of the battery 10 can be prevented, so that the safety of the battery 10 can be enhanced.

Here, the description has been given of the case where the sealing assembly 17 has a stacked structure including two rapture plates (lower vent member 24 and upper vent member 26), and has the protruding terminal cap 27 that covers the rapture plates. However, the sealing assembly 17 may be constituted of only the rupture plates or may have a structure in which an internal terminal plate, an insulating plate, and a rapture plate are stacked in order from the electrode assembly side. Alternatively, the sealing assembly may not have any rapture plate, and the bottom of the housing can may have a thin-walled easily breakable portion that breaks when the battery generates abnormal heat.

FIG. 4A is a plan view showing a winding outer surface 11a, the positive electrode lead 20, and an insulating tape 60 in the positive electrode 11 developed into a long shape, and FIG. 4B is a plan view showing a winding inner surface 11b, the positive electrode lead 20, and the insulating tape 60 in the positive electrode 11 developed into a long shape. FIG. 4C is also a plan view showing a winding outer surface 12a, the negative electrode lead 21, and an insulating tape 80 in the negative electrode 12 developed into a long shape, and FIG. 4D is a plan view showing a winding inner surface 12b, the negative electrode lead 21, and the insulating tape 80 in the negative electrode 12 developed into a long shape.

The winding outer surface 11a in the positive electrode 11 constitutes a positive electrode first surface, and the winding inner surface 11b in the positive electrode 11 constitutes a positive electrode second surface. The winding outer surface 12a in the negative electrode 12 also constitutes a negative electrode first surface, and the winding inner surface 12b in the negative electrode 12 constitutes a negative electrode second surface. In FIGS. 4A and 4B, a direction α indicates a positive electrode longitudinal direction when the positive electrode 11 is developed into a long shape, and a direction β indicates a positive electrode width direction when the positive electrode 11 is developed into the long shape. In FIGS. 4C and 4D, a direction γ indicates a negative electrode longitudinal direction when the negative electrode 12 is developed into a long shape, and a direction δ indicates a negative electrode width direction when the negative electrode 12 is developed into a long shape.

As shown in FIGS. 4A and FIG. 4B, the positive electrode 11 has two double-sided positive electrode current collector exposed portions 45a and 45b where the positive electrode current collector 41 is exposed in substantially identical regions in the positive electrode longitudinal direction (direction α shown in FIGS. 4A and 4B) on both the winding outer surface 11a and the winding inner surface 11b, and does not have a portion where the positive electrode current collector is exposed only on one surface. In the present embodiment, the positive electrode 11 does not have a portion where the positive electrode current collector is exposed only on one surface, though the positive electrode may have a portion where the positive electrode current collector is exposed only on one surface. The two double-sided positive electrode current collector exposed portions 45a and 45b are provided at locations spaced from both a winding start end and a winding finish end of the positive electrode 11 in the direction α and are arranged at a distance from each other in the direction α. The two double-sided positive electrode current collector exposed portions 45a and 45b have a lead fixed and exposed portion 45a where the positive electrode lead 20 is fixed and a lead unfixed and unexposed portion 45b, the lead unfixed and unexposed portion 45b being apart from the positive electrode lead 20 in the direction α and being unfixed to the positive electrode lead 20.

The two double-sided positive electrode current collector exposed portions 45a and 45b are each preferably present in a region located in the middle of the positive electrode 11 when the long-shaped positive electrode 11 is divided into three regions of the same length. In other words, when a coordinate (position) of the winding start end of the positive electrode 11 is defined as 0 (reference position) and a coordinate (position) of the winding finish end is defined as 1 with respect to the direction α, each of the two double-sided positive electrode current collector exposed portions 45a and 45b are preferably present at positions from 1/3 to 2/3 with respect to the direction α. The positive electrode lead 20 is also preferably fixed to a location that is located from 1/3 to 2/3 of the radius of the electrode assembly 14.

The negative electrode 12 has a double-sided negative electrode current collector exposed portion 55a where the negative electrode current collector 51 is exposed in substantially identical regions in the negative electrode longitudinal direction (direction γ shown in FIGS. 4C and 4D) on both the winding outer surface 12a and the winding inner surface 12b. The double-sided negative electrode current collector exposed portion 55a is provided between two double-sided negative electrode mixture layer arrangement portions 56a and 56b where the negative electrode mixture layer 52 is present on both the winding outer surface 12a and the winding inner surface 12b in the direction γ.

FIG. 5 is an enlarged schematic sectional view around the negative electrode lead 21 in a cross section that is orthogonal to the height direction of an electrode assembly 14 and that passes through the negative electrode lead 21. As shown in FIG. 5, the double-sided negative electrode current collector exposed portion 55a faces the double-sided positive electrode current collector exposed portions 45a and 45b through the separator 13. The lead unfixed and unexposed portion 45b is positioned closer to the winding start side than the lead fixed and exposed portion 45a. Then, a winding outer-side lead unfixed and unexposed portion 47b, which is positioned on the winding outer side of the lead unfixed and unexposed portion 45b, faces a winding inner-side negative electrode current collector exposed portion 57b, which is positioned on the winding inner side of the double-sided negative electrode current collector exposed portion 55a, through the separator 13. The positive electrode lead 20 is fixed to a winding inner-side lead fixed and exposed portion 48b, which is positioned on the winding inner side of the lead fixed and exposed portion 45a, and the negative electrode lead 21 is fixed to a winding outer-side negative electrode current collector exposed portion 57a, which is positioned on the winding outer side of the double-sided negative electrode current collector exposed portion 55a. The winding outer-side negative electrode current collector exposed portion 57a faces the winding inner-side lead fixed and exposed portion 48b through the separator 13.

In the present embodiment, the battery 10 has the two double-sided positive electrode current collector exposed portions 45a and 45b. However, the battery may have only one double-sided positive electrode current collector exposed portion. For example, a positive electrode current collector exposed portion 47a, which is positioned on the winding inner side of the lead unfixed and unexposed portion 45b in FIG. 5 may not be present. In other words, in FIG. 5, the positive electrode mixture layer may be arranged in a portion of the positive electrode current collector where the positive electrode current collector exposed portion 47a is present.

As shown in FIG. 1, The positive electrode lead 20 protrudes to a first side in the height direction (upper side in the height direction), and the negative electrode lead 21 protrudes to a second side in the height direction (lower side in the height direction). Preferably, the positive electrode lead 20 and the negative electrode lead 21 face each other and are spaced apart from each other in the height direction, and the positive electrode lead 20 and the negative electrode lead 21 are fixed at different height positions in the electrode assembly 14.

In the present embodiment, the positive electrode lead 20 does not radially overlap the negative electrode lead 21 via the separators 13. More specifically, assuming that an overlap allowance of the positive electrode lead 20 with the positive electrode 11 in the height direction is A [mm], an overlap allowance of the negative electrode lead 21 with the negative electrode 12 in the height direction is B [mm], and a negative electrode width of the negative electrode 12 is C [mm], (A + B) < C is established. Preferably, A < (C / 2) and B < (C / 2) are established.

At least a portion of the positive electrode lead 20 is arranged at a location overlapping, in the height direction of the electrode assembly 14, a negative electrode lead facing position in the positive electrode 11 that faces the negative electrode lead 21 via the separator 13. In other words, at least a portion of the positive electrode lead 20 and at least a portion of the negative electrode lead 21 are located within an identical winding direction range of the electrode assembly 14. In this way, the range of the winding direction of the electrode assembly, in which the flat plate-shaped electrode leads 20 and 21 are located, can be limited to a local range, so that the roundness of the electrode assembly 14 can be increased and as a result, the capacity of the battery 1 can be increased. The negative electrode lead 21, as in the case of the positive electrode lead 20, is preferably fixed to a location that is located from 1/3 to 2/3 of the radius of the electrode assembly 14.

Here, although the case where the positive electrode lead 20 is spaced from the negative electrode lead 21 in the height direction has been described, at least a portion of the positive electrode lead may be configured to overlap the negative electrode lead via the separator in a radial direction of the electrode assembly. Although the description has been given of the case where the positive electrode lead 20 and the negative electrode lead 21 are fixed at the locations located 1/3 to 2/3 of the radius of the electrode assembly 14, the positive electrode lead and the negative electrode lead may not be fixed at the locations located 1/3 to 2/3 of the radius of the electrode assembly 14.

In the present embodiment, as shown in FIGS. 4C and 4D, the winding outer surface 12a of the negative electrode 12 has an outermost negative electrode current collector exposed portion 58 where the negative electrode current collector 51 is exposed at the end portion on the winding finish side in the direction y, and the winding inner surface 12b of the negative electrode 12 also has a negative electrode current collector exposed portion 59 where the negative electrode current collector 51 is exposed at the end portion on the winding finish side in the direction γ. The length of the outermost negative electrode current collector exposed portion 58 in the direction γ is longer than the length of the negative electrode current collector exposed portion 59 in the direction γ.

As shown in FIG. 1, the outermost negative electrode current collector exposed portion 58 includes a portion located on the outermost surface of the electrode assembly 14. The outermost negative electrode current collector exposed portion 58 comes into contact with the inner circumferential surface of the battery 10 and is electrically connected to the inner circumferential surface of the housing can 16. By fixing the negative electrode lead 21 to a radial intermediate portion of the electrode assembly 14 and bringing the outermost negative electrode current collector exposed portion 58 in contact with the inner circumferential surface of the housing can 16 of the battery 10, both the longitudinal intermediate portion and the end portion on the winding finish side in the negative electrode 12 are electrically connected to the negative electrode terminal. This shortens the current collecting path for current to flow and reduces electrical resistance.

As shown in FIGS. 4A and FIG. 4B, each of the double-sided positive electrode current collector exposed portions 45a and 45b has the insulating tape 60 applied thereto on both the winding outer surface 11a and the winding inner surface 11b with the insulating tape 60 being partially over the positive electrode mixture layer 42 located on both the sides in the direction α. In addition, as shown in FIGS. 4C and 4D, the insulating tape 80 is also applied to the winding outer-side negative electrode current collector exposed portion 57a where the negative electrode lead 21 is fixed, in the state of covering at least the negative electrode lead. The insulating tape 80 may be applied in the state of covering the negative electrode mixture layer 52 located on both the sides in the direction γ. The insulating tape may be applied to the winding inner-side negative electrode current collector exposed portion 57b, or may be applied so as to cover the boundary between the negative electrode mixture layer and the negative electrode current collector exposed portion other than the winding inner-side negative electrode current collector exposed portion 57b. The insulating tapes 60 and 80 are provided for the purpose of preventing short circuits and preventing active materials from falling off. For example, the insulating tapes 60 and 80 may be configured with a tape having a base material made of polyimide film and an adhesive material made of silicone, though the tape may be made of any material as long as it has insulation properties and is applicable.

### <Example 1>

In the above described cylindrical battery, a negative electrode discharge utilization rate (Ah/g) defined as discharge capacity of the negative electrode mixture layer per 1.0 g of the negative electrode mixture layer was set to 0.68 Ah, and a silicon element weight ratio (wt%) defined as the weight ratio of the silicon element to the negative electrode mixture layer was set to 15%. The thickness of the negative electrode mixture layer was set to 79.6 µm.

The negative electrode discharge utilization rate was measured as follows. First, a fabricated battery was disassembled and an extracted negative electrode was placed to face lithium as a positive electrode. Then, discharge was conducted from the state where the negative electrode was 5 mV higher than lithium to the state where the negative electrode was 1 V higher than lithium. The negative electrode discharge utilization rate was calculated based on the charges released during the discharge.

The weight ratio of silicon element was measured using an inductively coupled plasma (ICP) after disassembling the fabricated battery. The ICP is a method of optical emission spectroscopy. When plasma energy is externally applied to an analysis sample, constituent elements (atoms) contained in the analysis sample are excited. In the ICP, emission lines (spectral lines) emitted when the excited atoms return to a lower energy level are measured, and based on the measured emission lines, the content of the constituent elements (atoms) is measured. The thickness of the negative electrode mixture layer was measured with a thickness gauge after disassembling the fabricated battery.

### <Example 2>

In the above described cylindrical battery, the discharge capacity per 1.0 g of the negative electrode mixture layer was set to 0.90 Ah and silicon element weight ratio wt% was set to 25%. The thickness of the negative electrode mixture layer was set to 64.9 µm. The negative electrode discharge utilization rate, the silicon element weight ratio, and the thickness of the negative electrode mixture layer were measured in the same way as in Example 1.

### <Example 3>

In the above described cylindrical battery, the discharge capacity per 1.0 g of the negative electrode mixture layer was set to 1.13 Ah and silicon element weight ratio wt% was set to 35%. The thickness of the negative electrode mixture layer was set to 57.9 µm. The negative electrode discharge utilization rate, the silicon element weight ratio, and the thickness of the negative electrode mixture layer were measured in the same way as in Example 1.

### <Comparative Example 1>

In comparison with the cylindrical batteries described above, the discharge capacity per 1.0 g of the negative electrode mixture layer was set to 0.35 Ah, which was less than 0.5 Ah, and the thickness of the negative electrode mixture layer was set to 117.2 µm, which was greater than 85 µm. The silicon element weight ratio wt% was set to 0%. The negative electrode discharge utilization rate, the silicon element weight ratio, and the thickness of the negative electrode mixture layer were measured in the same way as in Example 1.

### <Comparative Example 2>

In comparison with the cylindrical batteries described above, the discharge capacity per 1.0 g of the negative electrode mixture layer was set to 0.42 Ah, which was less than 0.5 Ah, and the thickness of the negative electrode mixture layer was set to 99.4 µm, which was greater than 85 µm. The silicon element weight ratio wt% was set to 4%. The negative electrode discharge utilization rate, the silicon element weight ratio, and the thickness of the negative electrode mixture layer were measured in the same way as in Example 1.

### <Comparative Example 3>

In comparison with the cylindrical batteries described above, the thickness of the negative electrode mixture layer was set to 104.4 µm, which was greater than 85 µm. The discharge capacity per 1.0 g of the negative electrode mixture layer was set to 0.68 Ah and the silicon element weight ratio wt% was set to 15%. The negative electrode discharge utilization rate, the silicon element weight ratio, and the thickness of the negative electrode mixture layer were measured in the same way as in Example 1.

### (Measurement of Capacity)

The capacity of each battery in Examples 1 to 3, and each battery in Comparative Examples 1 to 3 was measured. Specifically, after each battery was fabricated, each battery was charged with a constant current of 0.3 C under the condition of 25°C until each battery voltage reached 4.2 V, and then each battery was charged at a constant voltage of 4.2 V until the current value reached 0.02 C. After a 20-minute pause, each battery was discharged with a constant current of 0.2 C until the battery voltage reached 2.5 V, and the capacity (discharge capacity) was measured. The capacity of each battery was calculated with the capacity of the battery in Example 1 being assumed to be 100.

### (Measurement of Separator Crushing Amount)

Each battery in Examples 1 to 3 and each battery in Comparative Examples 1 to 3 were charged to 4.2 V with a constant current of 0.3 C under the environment air-cooled to 45°C, and then charged at a constant voltage of 4.2 V until the current value reached 0.02 C. After a 20-minute pause, each battery was discharged with a constant current of 0.5 C until the battery voltage reached 2.85 V, and then another 20-minute pause was taken. This charge and discharge cycle was repeated 100 times. Then, after the battery voltage reached 4.2 V with a constant current of 0.3 C under the air-cooled environment at 45°C, each battery was charged at a constant voltage of 4.2 V until the current value reached 0.02 C, so that each battery was fully charged (their SOC (state of charge) was 100%).

After that, each battery was dissembled to extract the separator, and a thickness t1 of a first location (location designated by 13a in FIG. 5) in the separator was measured using a scanning electron microscope (SEM), the first location facing a boundary between the double-sided negative electrode current collector exposed portion and the negative electrode mixture layer on the winding inner side of the double-sided negative electrode current collector exposed portion, in a radial direction (in a radial direction of the battery). In addition, a thickness t2 of a second location (location designated by 13b in FIG. 5) in the separator was measured, the second location radially facing a central portion of the double-sided negative electrode current collector exposed portion in the negative electrode longitudinal direction on the winding inner side of the double-sided negative electrode current collector exposed portion, and a separator crushing amount (t2 - t1) was measured. The separator crushing amount in each battery was calculated with the separator crushing amount in Example 1 being assumed to be 100. The scanning electron microscope, which is a device to observe the surface of a sample by irradiating the surface with an electron beam, emits the electron beam onto the sample in vacuum and images secondary electrons generated during the process. By using the scanning electron microscope, it is possible to capture irregularity images and composition contrast images of the sample surface.

### (Test Results)

**[Table 1]**

| | Negative electrode discharge utilization rate | Negative electrode mixture thickness | Silicon element weight ratio | Capacity | Separator crushing amount |
|---|---|---|---|---|---|
| | Ah/g | µm | wt% | index | index |
| Example 1 | 0.68 | 79.6 | 15 | 100 | 100 |
| Example 2 | 0.90 | 64.9 | 25 | 103 | 99 |
| Example 3 | 1.13 | 57.9 | 35 | 108 | 98 |
| Comparative Example 1 | 0.35 | 117.2 | 0 | 86 | 102 |
| Comparative Example 2 | 0.42 | 99.4 | 4 | 95 | 101 |
| Comparative Example 3 | 0.68 | 104.4 | 15 | 102 | 102 |

It was successfully confirmed that the batteries in Comparative Examples 1 and 2 having the negative electrode discharge utilization rate of less than 0.5 had capacities of 86 and 95, respectively, which were significantly smaller, by greater than or equal to 5%, than the capacity of the battery in Example 1 having a smallest capacity among the batteries in Examples.

The batteries in Comparative Examples 1 to 3, in which the negative electrode mixture thickness was greater than 85 µm, had larger separator crushing amounts than the battery in Example 1 having the largest separator crushing amount among Examples 1 to 3.

Particularly, when a comparison is made between the batteries in Example 1 and Comparative Example 3, which had the same conditions regarding the negative electrode discharge utilization rate and the silicon element weight ratio and were different only in negative electrode mixture thickness, the separator crushing amount of the battery in Comparative Example 2 increased by 2% from that of the battery in Example 1. Therefore, it was successfully confirmed that the negative electrode mixture thickness had a decisive effect on the separator crushing amount.

The inventor of the present invention has found, through the above described tests and numerous other tests, that when the negative electrode mixture thickness is less than or equal to 85 µm, the separator crushing amount can be restrained and the capacity can be increased unless the negative electrode discharge utilization rate is less than 0.5. Note that as shown in Examples 1 to 3, when the negative electrode mixture thickness is greater than or equal to 55 µm and less than or equal to 80 µm, the separator crushing amount can be effectively restrained and the capacity can be effectively increased.

All of the batteries in Examples 1 to 3 have the silicon element weight ratios that are included in the range of greater than or equal to 7% and less than or equal to 50%. The inventor of the present invention has confirmed, through the above described tests and numerous other tests, that when the silicon element weight ratio is included in the range of greater than or equal to 7% and less than or equal to 50%, the separator crushing amount can be easily restrained and the capacity can be easily increased. When the silicon element weight ratio is greater than or equal to 15%, the output of the battery 10 is likely to be high, and when the silicon element weight ratio is greater than or equal to 25%, the output of the battery 10 can be significantly increased.

The present disclosure is not limited to the embodiment and its modifications disclosed, and various improvements and changes are possible without departing from the scope of the Claims of the present application and any equivalents thereof.

For example, in the above embodiment, the description has been given of the case where the outermost negative electrode current collector exposed portion 58 provided at the end portion on the winding finish side of the negative electrode 12 in the longitudinal direction is brought into contact with the inner circumferential surface of the housing can 16. However, the outermost circumferential surface of the electrode assembly in the winding direction may be configured with a separator, and a single negative electrode lead, which is electrically connected to an intermediate portion, such as a central portion, in the longitudinal direction of the negative electrode current collector 51, may be electrically connected to the housing can.

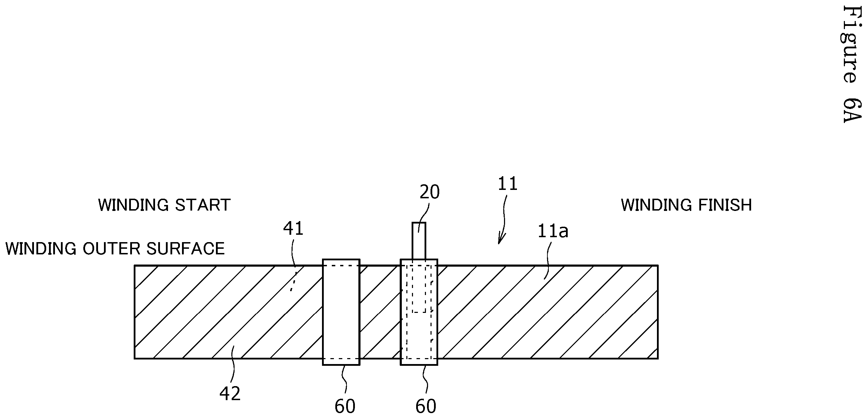

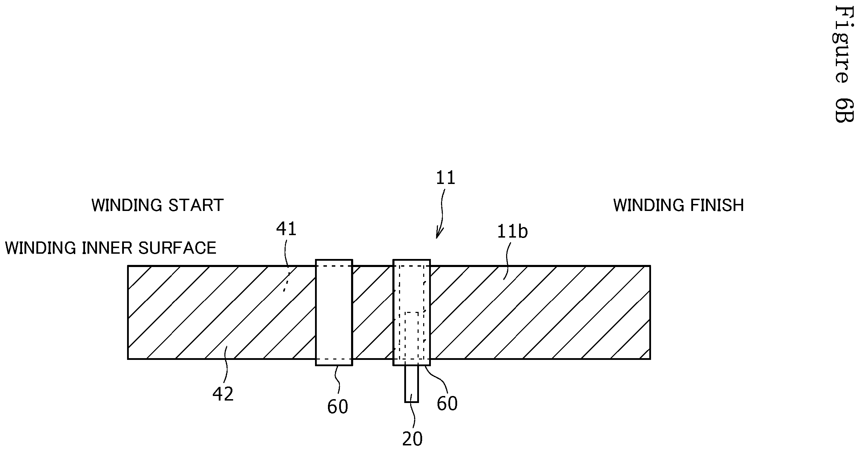

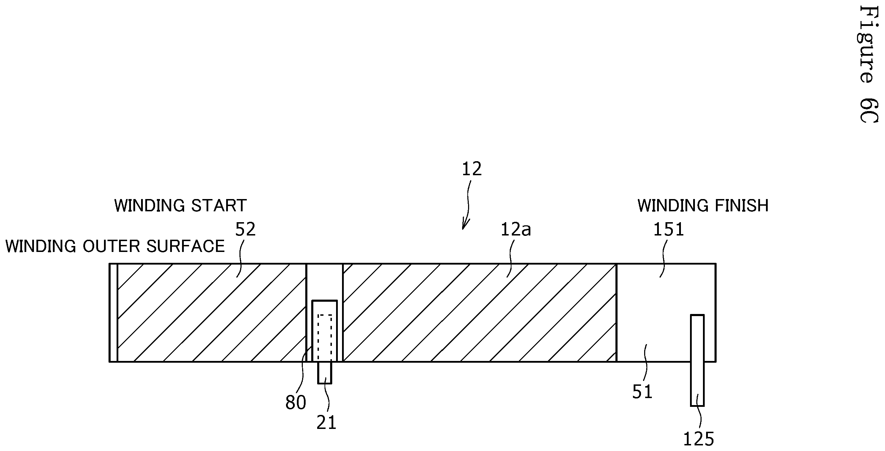

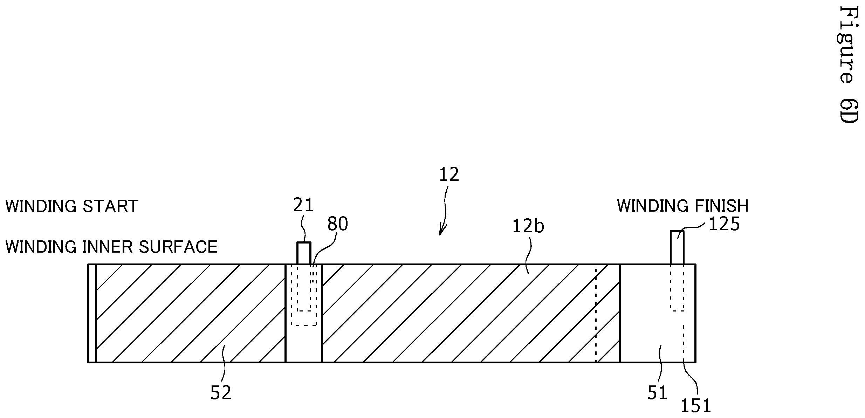

Alternatively, a negative electrode current collector exposed portion may be provided at the end portion on the winding finish side of the negative electrode, and the negative electrode current collector exposed portion and the inner surface of the housing can may be configured to be electrically connected through a negative electrode lead that is different from the negative electrode lead 21 fixed to the intermediate portion of the radius of the electrode assembly 14. FIG. 6A is a plan view showing the winding outer surface 11a, the positive electrode lead 20, and the insulating tape 60 in the positive electrode 11 developed into a long shape in a cylindrical lithium-ion secondary battery in a first modification, and FIG. 6B is a plan view showing the winding inner surface 11b, the positive electrode lead 20, and the insulating tape 60 in the positive electrode 11 developed into a long shape. FIG. 6C is a plan view showing the winding outer surface 12a, the negative electrode lead 21, a winding finish-side negative electrode lead 125, and the insulating tape 80 in the negative electrode 12 developed into a long shape in the cylindrical lithium-ion secondary battery in the first modification, and FIG. 6D is a plan view showing the winding inner surface 12b, the negative electrode lead 21, the winding finish-side negative electrode lead 125, and the insulating tape 80 in the negative electrode 12 developed into a long shape.

As shown in FIGS. 6A to 6D, the cylindrical lithium-ion secondary battery in Example 2 includes the negative electrode lead 21, one end portion of which is joined to the double-sided negative electrode current collector exposed portion provided at an intermediate position of the negative electrode 12 in the negative electrode longitudinal direction, and additionally includes the winding finish-side negative electrode lead 125, one end portion of which is joined to a negative electrode current collector exposed portion 151 provided in the winding finish-side end portion of the negative electrode 12. The other end of each of the negative electrode lead 21 and the winding finish-side negative electrode lead 125 is joined to the bottom inner surface of the housing can 16. In the first modification, as in the embodiment disclosed, both the longitudinal intermediate portion and the end portion on the winding finish side in the negative electrode 112 are electrically connected to the negative electrode terminal, so that the current collection path is shortened and the electrical resistance is reduced.

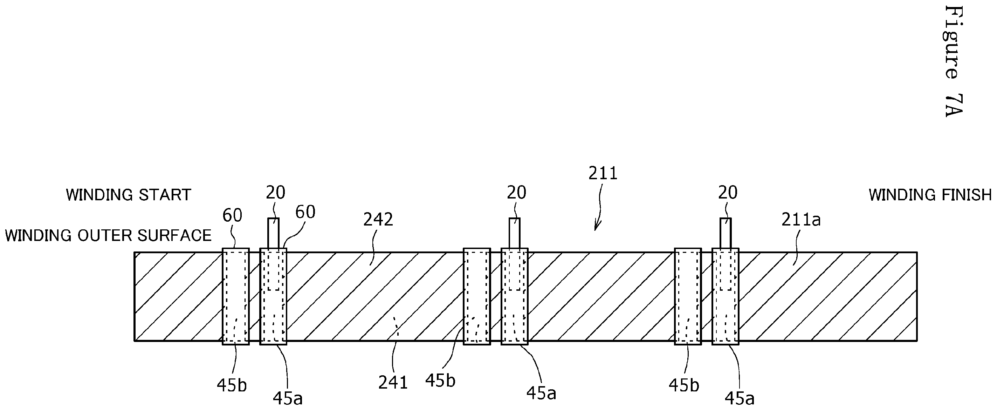

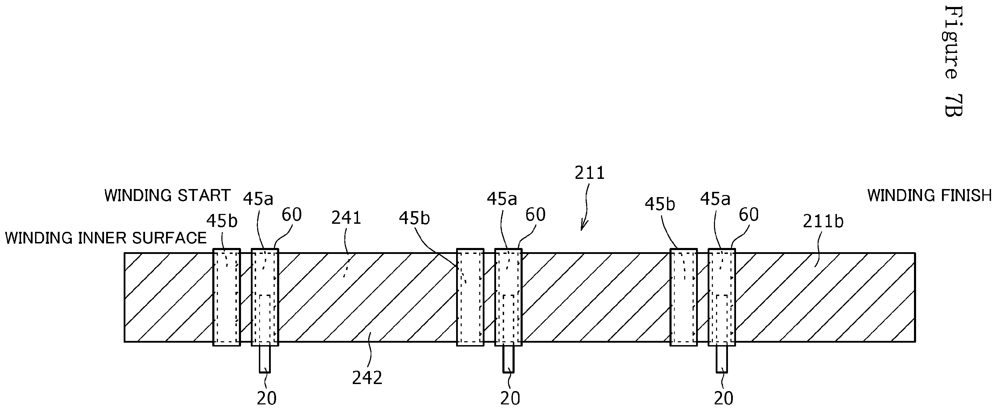

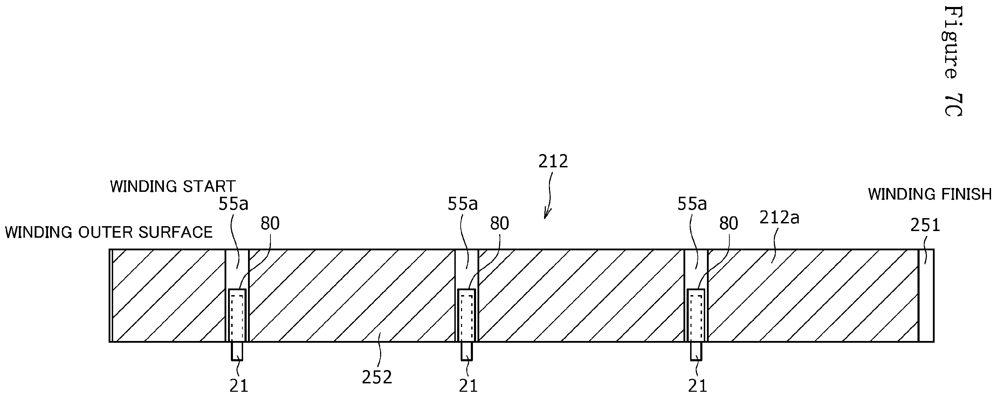

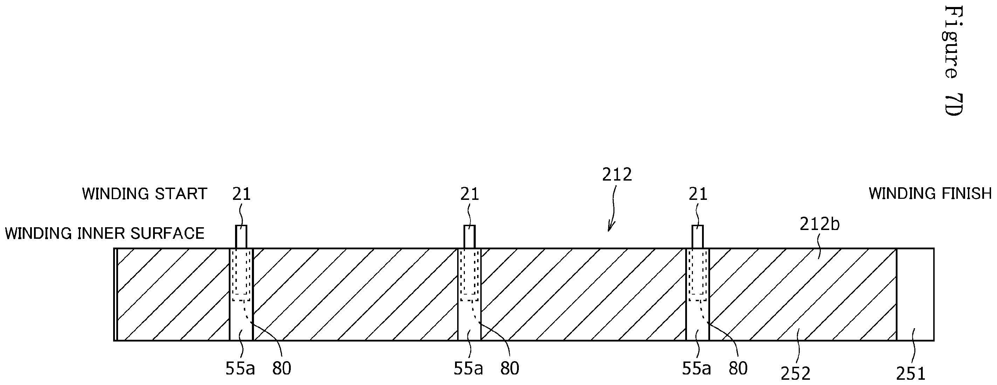

The description has also been given of the case where the battery 10 has only one positive electrode lead 20. However, the battery may comprise two or more electrode leads. FIG. 7A is a plan view showing a winding outer surface 211a, three positive electrode leads 20, 20, and 20, and the insulating tape 60 in a positive electrode 211 developed into a long shape in a cylindrical non-aqueous electrolyte secondary battery in a second modification, and FIG. 7B is a plan view showing a winding inner surface 211b, the three positive electrode leads 20, 20, and 20, and the insulating tape 60 in the positive electrode 211 developed into a long shape. FIG. 7C is a plan view showing a winding outer surface 212a, three negative electrode leads 21, 21, and 21, and the insulating tape 80 in a negative electrode 212 developed into a long shape in the cylindrical non-aqueous electrolyte secondary battery in the second modification, and FIG. 7D is a plan view showing the winding inner surface 212b, the three negative electrode leads 21, 21, and 21, and the insulating tape 80 in the negative electrode 212 developed into a long shape. As shown in FIGS. 7A and 7B, the positive electrode 211 comprises a positive electrode current collector 241 and a positive electrode mixture layer 242. In addition, as shown in FIGS. 7C and 7D, the negative electrode 212 comprises a negative electrode current collector 251 and a negative electrode mixture layer 252.

As shown in FIGS. 7A to 7D, the cylindrical non-aqueous electrolyte secondary battery in the second modification includes N sets (N being natural number greater than or equal to 2) of two double-sided positive electrode current collector exposed portions 45a and 45b, the positive electrode lead 20, the double-sided negative electrode current collector exposed portion 55a, and the negative electrode lead 21, which have a relative positional relation described in detail with reference to FIGS. 4A to 4D, the N sets being spaced apart from each other in the winding direction of the electrode assembly. For example, the cylindrical non-aqueous electrolyte secondary battery includes the three sets as shown in FIGS. 7A to 7D. In this way, the current collection path in each of the positive electrode 211 and negative electrode 212 can be further shortened, so that the resistance of the cylindrical non-aqueous electrolyte secondary battery can be considerably reduced.

Note that in the above description, each current collector exposed portion was provided from one end to the other end in the width direction of the long-shaped (strip-shaped) electrode. However, the electrode assembly may have one or more current collector exposed portions where the current collector is not exposed in the entire width direction of the long-shaped electrode. In this case, in the one or more current collector exposed portions, the current collector exposed portion is arranged only in a portion in the height direction and therefore, the mixture layer is arranged in the region overlapping the current collector exposed portion in the height direction (in the width direction of the electrode), so that the capacity can be increased.

The cylindrical battery of the present disclosure may have following configurations.

Configuration 1: a non-aqueous electrolyte secondary battery, comprising: an electrode assembly formed by winding a positive electrode and a negative electrode through a separator, the positive electrode having a positive electrode current collector and a positive electrode mixture layer arranged on the positive electrode current collector, the negative electrode having a negative electrode current collector and a negative electrode mixture layer arranged on the negative electrode current collector; a non-aqueous electrolyte; a bottomed cylindrical housing can that houses the electrode assembly and the non-aqueous electrolyte; one or more positive electrode leads that are fixed to the positive electrode current collector and that include a protruding portion protruding from a first side in a height direction of the electrode assembly; and one or more negative electrode leads that are fixed to the negative electrode current collector and that include a protruding portion protruding from a second side in the height direction of the electrode assembly, wherein the positive electrode mixture layer contains a lithium-containing composite oxide as a positive electrode active material, the negative electrode mixture layer contains a silicon-containing material as a negative electrode active material, a discharge capacity per 1.0 g of the negative electrode mixture layer is greater than or equal to 0.5 Ah, the negative electrode mixture layer has a thickness of less than or equal to 85 µm, the positive electrode has one or more double-sided positive electrode current collector exposed portions where the positive electrode current collector is exposed in substantially identical regions in a positive electrode longitudinal direction on both a positive electrode first surface and a positive electrode second surface, the one or more double-sided positive electrode current collector exposed portions include one or more lead fixed and exposed portions that are fixed to the positive electrode lead, the negative electrode has one or more double-sided negative electrode current collector exposed portions where the negative electrode current collector is exposed in substantially identical regions in a negative electrode longitudinal direction on both a negative electrode first surface and a negative electrode second surface, the one or more double-sided negative electrode current collector exposed portions faces the one or more double-sided positive electrode current collector exposed portions through the separator, the one or more double-sided negative electrode current collector exposed portions are fixed to the negative electrode lead, and at least a portion of the positive electrode lead is fixed to a location that overlaps, in the height direction, a negative electrode lead facing position in the positive electrode that faces the negative electrode lead via the separator.

Configuration 2: the non-aqueous electrolyte secondary battery according to Configuration 1, wherein the one or more double-sided positive electrode current collector exposed portions have two or more double-sided positive electrode current collector exposed portions, the two or more double-sided positive electrode current collector exposed portions are provided at locations spaced from both a winding start end and a winding finish end in the positive electrode longitudinal direction and are arranged at a distance from each other in the positive electrode longitudinal direction, and the two or more double-sided positive electrode current collector exposed portions include the lead fixed and exposed portion and a lead unfixed and unexposed portion where the positive electrode lead is not fixed.

Configuration 3: the non-aqueous electrolyte secondary battery according to Configuration 1 or 2, wherein a negative electrode current collector exposed portion that is in contact with an inner circumferential surface of the housing can and that exposes the negative electrode current collector is provided at a winding finish end portion of the negative electrode.

Configuration 4: the non-aqueous electrolyte secondary battery according to any one of Configurations 1 to 3, wherein the negative electrode mixture layer has a thickness of greater than or equal to 40 µm.

Configuration 5: the non-aqueous electrolyte secondary battery according to any one of Configurations 1 to 4, wherein the silicon-containing material includes an ionically conductive phase and an Si phase dispersed in the ionically conductive phase.

Configuration 6: the non-aqueous electrolyte secondary battery according to Configuration 5, wherein the ionically conductive phase includes an amorphous carbon phase.

Configuration 7: the non-aqueous electrolyte secondary battery according to Configuration 5 or 6, wherein a weight ratio of the Si phase in the silicon-containing material is greater than or equal to 30% and less than or equal to 60%.

Configuration 8: the non-aqueous electrolyte secondary battery according to any one of Configurations 1 to 7, wherein a weight ratio of silicon element in the negative electrode mixture layer is greater than or equal to 7 mass%.

Configuration 9: the non-aqueous electrolyte secondary battery according to any one of Configurations 1 to 8, wherein a weight ratio of silicon element in the negative electrode mixture layer is less than or equal to 50 mass%.

Configuration 10: the non-aqueous electrolyte secondary battery according to any one of Configurations 1 to 9, wherein the lithium-containing composite oxide has a layered rock-salt structure.

### REFERENCE SIGNS LIST

10 Battery, 11, 211 Positive electrode, 11a, 211a wound outer surface of positive electrode, 11b, 211b Winding inner surface of positive electrode, 12, 112, 212 Negative electrode, 12a, 212a Winding outer surface of negative electrode, 12b, 212b Winding inner surface of negative electrode, 13 Separator, 14 Electrode assembly, 16 Housing can, 17 Sealing assembly, 18, 19 Insulating plate, 20 Positive electrode lead, 21 Negative electrode lead, 23 Sealing plate, 23a Through-hole, 24 Lower vent member, 25 Insulating member, 26 Upper vent member, 27 Terminal cap, 27a Through-hole, 28 Gasket, 29 Circumferential edge portion, 30 Cylindrical portion, 34 Grooved portion, 38 Shoulder portion, 41, 241 Positive electrode current collector, 42, 242 Positive electrode mixture layer, 45a, 45b Double-sided positive electrode current collector exposed portion, 45a Lead fixed and exposed portion, 45b Lead unfixed and unexposed portion, 47a Positive electrode current collector exposed portion, 47b Winding outer-side lead unfixed and unexposed portion, 48b Winding inner-side lead fixed and exposed portion, 51, 251 Negative electrode current collector, 52, 252 Negative electrode mixture layer, 55a Double-sided negative electrode current collector exposed portion, 56a, 56b Double-sided negative electrode mixture layer arrangement portion, 57a Winding outer-side negative electrode current collector exposed portion, 57b Winding inner-side negative electrode current collector exposed portion, 58 Outermost negative electrode current collector exposed portion, 59 Negative electrode current collector exposed portion, 60, 80 Insulating tape, 68 Bottom portion, 70 Silicon-containing material, 71 Ionically conductive phase, 72 Si phase, 125 Winding finish-side negative electrode lead, 151 Negative electrode current collector exposed portion

## Claims

1. A non-aqueous electrolyte secondary battery, comprising:
an electrode assembly formed by winding a positive electrode and a negative electrode through a separator, the positive electrode having a positive electrode current collector and a positive electrode mixture layer arranged on the positive electrode current collector, the negative electrode having a negative electrode current collector and a negative electrode mixture layer arranged on the negative electrode current collector;
a non-aqueous electrolyte;
a bottomed cylindrical housing can that houses the electrode assembly and the non-aqueous electrolyte;
one or more positive electrode lead that are fixed to the positive electrode current collector and that include a protruding portion protruding from a first side in a height direction of the electrode assembly; and
one or more negative electrode leads that are fixed to the negative electrode current collector and that include a protruding portion protruding from a second side in the height direction of the electrode assembly, wherein
the positive electrode mixture layer contains a lithium-containing composite oxide as a positive electrode active material,
the negative electrode mixture layer contains a silicon-containing material as a negative electrode active material,
a discharge capacity per 1.0 g of the negative electrode mixture layer is greater than or equal to 0.5 Ah,
the negative electrode mixture layer has a thickness of less than or equal to 85 µm,
the positive electrode has one or more double-sided positive electrode current collector exposed portions where the positive electrode current collector is exposed in substantially identical regions in a positive electrode longitudinal direction on both a positive electrode first surface and a positive electrode second surface,
the one or more double-sided positive electrode current collector exposed portions include one or more lead fixed and exposed portions that are fixed to the positive electrode lead,
the negative electrode has one or more double-sided negative electrode current collector exposed portions where the negative electrode current collector is exposed in substantially identical regions in a negative electrode longitudinal direction on both a negative electrode first surface and a negative electrode second surface,
the one or more double-sided negative electrode current collector exposed portions faces the one or more double-sided positive electrode current collector exposed portions through the separator,
the one or more double-sided negative electrode current collector exposed portion are fixed to the negative electrode lead, and
at least a portion of the positive electrode lead is fixed to a location that overlaps, in the height direction, a negative electrode lead facing position in the positive electrode that faces the negative electrode lead via the separator.

2. The non-aqueous electrolyte secondary battery according to Claim 1, wherein
the one or more double-sided positive electrode current collector exposed portions have two or more double-sided positive electrode current collector exposed portions,
the two or more double-sided positive electrode current collector exposed portions are provided at locations spaced from both a winding start end and a winding finish end in the positive electrode longitudinal direction and are arranged at a distance from each other in the positive electrode longitudinal direction, and
the two or more double-sided positive electrode current collector exposed portions include the lead fixed and exposed portion and a lead unfixed and unexposed portion where the positive electrode lead is not fixed.

3. The non-aqueous electrolyte secondary battery according to Claim 1 or 2, wherein a negative electrode current collector exposed portion that is in contact with an inner circumferential surface of the housing can and that exposes the negative electrode current collector is provided at a winding finish end portion of the negative electrode.

4. The non-aqueous electrolyte secondary battery according to Claim 1 or 2, wherein the negative electrode mixture layer has a thickness of greater than or equal to 40 µm.

5. The non-aqueous electrolyte secondary battery according to Claim 1 or 2, wherein the silicon-containing material includes an ionically conductive phase and an Si phase dispersed in the ionically conductive phase.

6. The non-aqueous electrolyte secondary battery according to Claim 5, wherein the ionically conductive phase includes an amorphous carbon phase.

7. The non-aqueous electrolyte secondary battery according to Claim 5, wherein a weight ratio of the Si phase in the silicon-containing material is greater than or equal to 30% and less than or equal to 60%.

8. The non-aqueous electrolyte secondary battery according to Claim 1 or 2, wherein a weight ratio of silicon element in the negative electrode mixture layer is greater than or equal to 7 mass%.

9. The non-aqueous electrolyte secondary battery according to Claim 1 or 2, wherein a weight ratio of silicon element in the negative electrode mixture layer is less than or equal to 50 mass%.

10. The non-aqueous electrolyte secondary battery according to Claim 1 or 2, wherein the lithium-containing composite oxide has a layered rock-salt structure.
